# EUROPÄISCHE PATENTANMELDUNG

(11) **EP 3 118 051 A1**
(43) Veröffentlichungstag der Anmeldung: **18.01.2017**
(21) Anmeldenummer: 16001565.7
(22) Anmeldetag: 15.07.2016
(51) Int. Cl.: B60L 11/18, B62M 6/90, H01M 2/20, H02K 5/22, H02K 7/116

(54) **ANORDNUNG ZUR LEISTUNGS- UND SIGNALÜBERTRAGUNG ZWISCHEN ZWEI MECHANISCH VERBINDBAREN EINHEITEN**

(30) Priorität: 17.07.2015 DE 102015009091
(71) Anmelder: Drive & Innovation GmbH & Co. KG, 90471 Nürnberg (DE)
(72) Erfinder: Nagler, Philipp, 91207 Lauf a.d. Pegnitz (DE)
(74) Vertreter: Liebl, Thomas

(57) **Zusammenfassung**

Anordnung zur Leistungs- und Signalübertragung bei einer aus wenigstens zwei Einheiten (1, 2, 3) bestehenden Antriebseinrichtung, wobei die wenigstens zwei Einheiten (1, 2, 3) mittels einer aus einer positiven Verschlussteilbaugruppe (4, 4') und einer negativen Verschlussteilbaugruppe (6, 6') bestehenden Verschlussbaugruppe (4, 4', 6, 6') mechanisch durch Ineinanderstecken und Drehen von einer Steckposition um eine Drehachse (100) in eine Verschlussposition nach Art eines Bajonettverschlusses lösbar miteinander verbindbar sind, wobei die positive Verschlussteilbaugruppe (4, 4') wenigstens ein Eingriffselement (5, 5')und die zweite, negative Verschlussteilbaugruppe (6, 6') wenigstens ein das Eingriffselement (5, 5') im gekoppelten Zustand der Verschlussbaugruppe (4, 4', 6, 6') zentrisch aufnehmendes Hinterschnittelement (7, 7') umfasst. Es wird vorgeschlagen, dass die Leistungsübertragung über ein aus zwei Leistungsübertragungsbaugruppen (110, 111) bestehendes Leistungsübertragungselement bewerkstelligt wird, wobei die zwei Leistungsübertragungsbaugruppen (110, 111) lösbar miteinander verbindbar sind und die erste Leistungsübertragungsbaugruppe (111) koaxial zur Drehachse (100) an der positiven Verschlussteilbaugruppe (4, 4') und die zweite Leistungsübertragungsbaugruppe (110) koaxial zur Drehachse (100) an der negativen Verschlussteilbaugruppe (6, 6') angeordnet sind, derart dass mit dem Verbinden der positiven und der negativen Verschlussteilbaugruppe (4, 4',6, 6') die zwei Leistungsübertragungsbaugruppen (110, 111) miteinander verbunden werden. Weiter wird vorgeschlagen, dass die Signalübertragung über eine aus zwei Signalübertragungsbaugruppen bestehende Signalübertragungseinheit erfolgt, wobei die zwei Signalübertragungsbaugruppen lösbar miteinander verbindbar sind und die erste Signalübertragungsbaugruppe beabstandet zur Drehachse (100) an der positiven Verschlussteilbaugruppe (4, 4') und die zweite Signalübertragungsbaugruppe beabstandet zur Drehachse (100) an der negativen Verschlussteilbaugruppe (6, 6') angeordnet ist, derart dass mit dem Verbinden der positiven und der negativen Verschlussteilbaugruppe (4, 4',6, 6') die zwei Signalübertragungsbaugruppen zum Signalaustausch miteinander verbunden sind.

## Beschreibung

Anordnung zur Leistungs- und Signalübertragung bei einer aus wenigstens zwei Einheiten bestehenden Antriebseinrichtung, wobei die wenigstens zwei Einheiten mittels einer aus einer positiven Verschlussteilbaugruppe und einer negativen Verschlussteilbaugruppe bestehenden Verschlussbaugruppe mechanisch durch Ineinanderstecken und Drehen um eine Drehachse nach Art eines Bajonettverschlusses lösbar miteinander verbindbar sind, wobei die positive Verschlussteilbaugruppe ein Eingriffselement und die negative Verschlussteilbaugruppe ein Hinterschnittelement umfasst.

Im Stand der Technik sind Fahrräder mit Antriebsmotoren bekannt. Beispielsweise lehrt WO 2013/007 828 A2 einen Fahrradrahmen mit einem Rahmenausschnitt, der zur abnehmbaren Halterung eines separaten Energiespeichers dient. Die lösbare Einheit kann eingeklappt werden und in der eingeklappten Anordnung dient diese als Transportanordnung zum kompakteren Transport. Während des Betriebs des Elektroantriebs muss sich diese Baugruppe in seiner gestreckten Ausrichtung befinden, da nur dann beide Teile über eine Steckverbindung elektrisch miteinander verbunden sind.

Weiter ist es aus der DE 102013022186 B3 eine Antriebsvorrichtung für ein zumindest temporär und/oder anteilig mit Muskelkraft antreibbares Fahrzeug bekannt, wobei die Antriebsvorrichtung eine elektrische Motoreinheit; eine die Motoreinheit versorgende Energiespeichereinheit und eine, die Leistung der Motoreinheit in einen Triebstrang einbringende Übertragungseinheit umfasst. Hierbei sind die Einheiten der Antriebsvorrichtung durch Koppelvorrichtungen miteinander verbunden. Die Koppelvorrichtung erlaubt ein Lösen der einzelnen Einheiten voneinander und weist an beiden zu verbindenden Einheiten Verbindungselemente auf, die in deren Eingriffsstellung eine Kopplung beziehungsweise Verbindung der zu verbindenden Einheiten bewirken. Die Koppelvorrichtung kann dabei die Einheiten beispielsweise nach Art eines Bajonettverschlusses miteinander verbinden.

Ausgehend vom vorstehend genannten Stand der Technik ist es Aufgabe der Erfindung, eine Anordnung der vorstehend genannten Art anzugeben, die eine Anordnung zur Leistungs- und Signalübertragung enthält.

Es wurde gefunden, dass sich die Aufgabe mit einer Anordnung gemäß Anspruch 1 lösen lässt, vorteilhafte Ausgestaltungen sind in den abhängigen Ansprüchen gekennzeichnet.

Die Anordnung sieht vor, dass die Leistungsübertragung über ein aus zwei Leistungsübertragungsbaugruppen bestehendes Leistungsübertragungselement bewerkstelligt wird, wobei die zwei Leistungsübertragungsbaugruppen lösbar miteinander verbindbar sind. Die erste Leistungsübertragungsbaugruppe ist dabei koaxial zur Drehachse an der positiven Verschlussteilbaugruppe und die zweite Leistungsübertragungsbaugruppe koaxial zur Drehachse an der negativen Verschlussteilbaugruppe angeordnet. Die Drehachse ist dabei die Achse, um die die oben angesprochenen Einheiten der Antriebseinrichtung gegeneinander verdreht werden um eine mechanische Kopplung nach Art eines Bajonettverschlusses herbeizuführen. Die Anordnung der Leistungsübertragungsbaugruppen an den Verschlussteilbaugruppen ist dabei vorteilhaft so gewählt, dass mit dem Verbinden der positiven und der negativen Verschlussteilbaugruppe, also dem Ineinanderstecken und Verdrehen, die zwei Leistungsübertragungsbaugruppen ebenfalls verbunden werden. Um mit dieser Anordnung aus Verschlussbaugruppe und Leistungsübertragungselement eine Signalübertragung zu bewerkstelligen ist eine aus zwei Signalübertragungsbaugruppen bestehende Signalübertragungseinheit vorgesehen, wobei die zwei Signalübertragungsbaugruppen zur Drehachse beabstandet an der positiven und der negativen Verschlussteilbaugruppe angeordnet und lösbar miteinander verbindbar sind, wobei das Verbinden vorteilhaft mit dem Verbinden der positiven und der negativen Verschlussteilbaugruppe erfolgt. Unter Verbindbar im vorstehend angesprochenen Sinn ist zu verstehen, dass die zwei Signalübertragungsbaugruppen durch die mechanische Verbindung der Verschlussteilbaugruppen in eine relative Lage zueinander gebracht werden, die eine Signalübertragung erlaubt. Diese Signalübertragung kann mittels leitfähiger Verbindung, kapazitiver Kopplung, induktiver Kopplung oder mittels elektromagnetischer Wellen erfolgen. Mit einer Anordnung der vorstehend genannten Art wird vorteilhaft erreicht, dass mit einer Einsteck- und Drehbewegung sowohl die mechanische Verbindung, als auch die Verbindung zur Leistungsübertragung und die Verbindung zur Signalübertragung bewerkstelligt werden.

Eine wenig aufwändige vorteilhafte Ausgestaltung der Signalübertragungseinheit ist dahingehend vorgesehen, dass die erste Signalübertragungsbaugruppe aus einer Gruppe von Federkontakten besteht, wobei die Federkontakte jeweils radial zur Drehachse unterschiedlich beabstandet, elektrisch isolierend an der positiven Verschlussteilbaugruppe angeordnet sind und die zweite Signalübertragungsbaugruppe aus zu wenigstens einer Gruppe zusammengefassten Kontaktbereichen besteht, wobei die Kontaktbereiche jeweils radial zur Drehachse unterschiedlich beabstandet, elektrisch isolierend an der negativen Verschlussteilbaugruppe angeordnet sind und dass der Abstand jedes der Federkontakte zur Drehachse mit dem Abstand eines der Kontaktbereiche der wenigstens einen Gruppe von Kontaktbereichen gleich ist. Durch diese Anordnung beschreiben die Federkontakte und Kontaktbereiche beim Koppelvorgang durch das Verdrehen der Verschlussteilbaugruppen um ihre Drehachse konzentrische Kreisbahnen, derart, dass die Federkontakte und die Kontaktbereiche einer Gruppe in der Verschlussstellung der Verschlussbaugruppe jeweils miteinander korrespondieren und jeweils eine elektrisch leitende Verbindung zwischen den Federkontakten und den jeweils zugeordneten Kontaktbereichen bilden. Dabei liegen die Federkontakte an den jeweils zugeordneten Kontaktbereichen unter Federspannung an. Dadurch, dass die Kreisbahnen zueinander beabstandet sind, kann sichergestellt werden, dass bestimmte Federkontakte bestimmte Kontaktpunkte nicht berühren. Auf diese Weise lässt sich verhindern, dass in der Steuerung, der die Signalübertragungseinheit zugeordnet ist, steuerungstechnisch undefinierte oder ungewollte Zustände entstehen.

In vorteilhafter Weiterbildung der vorstehend beschriebenen Anordnung ist vorgesehen, die Gruppe von Federkontakten als Federkontaktleiste auszubilden, wobei diese aus einem elektrisch nicht leitenden Kontaktträger und den darin bevorzugt reihenförmig angeordneten jeweils elektrisch isoliert gehaltenen Federkontakten besteht, wobei der Kontaktträger so in einer Aussparung des Eingriffselementes angeordnet ist, dass die Federkontakte über die Ebene der freien Stirnseite des Eingriffselementes hinaus ragen. Weiter ist vorzugsweise vorgesehen, dass der Kontaktträger auf der den Federkontakten gegenüber liegenden Seite vorteilhaft als Steckkontaktleiste ausgebildet ist, wobei jeweils ein Federkontakt mit jeweils einem Steckkontakt der Steckkontaktleiste elektrisch leitend verbunden ist.

Eine weitere vorteilhafte Ausgestaltung sieht vor, die Federkontakte linear federnd auszubilden, dabei kann es sich bevorzugt um linear federnde Stifte oder federnd gelagerte Stiftelemente handeln. Selbstverständlich können die Federkontakte auch selbsffedernd ausgebildet sein, derart, dass das verwendete Material eine Federeigenschaft aufweist.

Für die zweite Signalübertragungsbaugruppe ist eine vorteilhafte Ausgestaltung dahingehend vorgesehen, dass das Hinterschnittelement auf einem Träger angeordnet ist, der seinerseits stirnseitig an jeweils einer von zwei zu koppelnden Einheiten angeordnet ist und dass die zweite Signalübertragungsbaugruppe aus einem Platinenelement besteht, das unmittelbar oder unter Zwischenlage weiterer Elemente mittelbar zwischen dem Hinterschnittelement und dem Träger angeordnet ist und auf dessen, der zentrischen Einstecköffnung im Hinterschnittelement zugewandten Seite die wenigstens eine Gruppe von Kontaktbereichen angeordnet ist. Der vorstehend beschriebene Aufbau der zweiten Signalübertragungsbaugruppe als Platinenelement erlaubt es vorteilhaft, weitere Komponenten, wie zum Beispiel Leiterbahnen, elektrische Baugruppen oder elektronische Baugruppen auf diesem Platinenelement anzuordnen.

Besonders vorteilhaft ist es, von den Kontaktbereichen der wenigstens einen Gruppe von Kontaktbereichen leitende Verbindungen zu einer Kontaktleiste zu führen, die auf dem Platinenelement angeordnet ist, vorzugsweise ist die Kontaktleiste auf der dem Hinterschnittelement abgewandten Seite des Platinenelementes oder an der Schmalseite des Platinenelementes angeordnet. Bei den leitenden Verbindungen kann es sich um auf dem Platinenelement angeordnete Leiterbahnen handeln, die in der Kontaktleiste enden.

Ist die Verschlussbaugruppe so ausgebildet, dass die positive Verschlussteilbaugruppe und die negative Verschlussteilbaugruppe in unterschiedlichen Drehwinkelpositionen zusammensteckbar und durch Drehen um die Drehachse in unterschiedlichen Verschlusspositionen miteinander verriegelbar sind, ist es von besonderem Vorteil für jede dieser möglichen Verschlusspositionen jeweils eine Gruppe von Kontaktbereichen vorzusehen. Die Anordnung der Gruppe von Kontaktbereichen erfolgt dabei so, dass nach Verdrehen der Verschlussteilbaugruppen in eine der Verschlusspositionen die Kontaktbereiche einer Gruppe mit den Federkontakten korrespondieren und im gekoppelten Zustand der Verschlussbaugruppe mit diesen eine elektrisch leitende Verbindung bilden.

Weiter ist es vorteilhaft die Anordnung so auszubilden, dass die Winkelposition der Kontaktbereiche der wenigstens einen Gruppe und ihre Längenerstreckung auf der jeweiligen Kreisbahn so bemessen ist, das der elektrische Kontakt der einzelnen Kontaktbereiche mit dem jeweils zugeordneten Federkontakt bei vorgegebenen Drehwinkelbereichen zwischen der Steckposition und der Verschlussposition der Verschlussbaugruppe herstellbar ist. Durch diese Maßnahme wird vorteilhaft erreicht, dass die leitende Verbindung zwischen den Federkontakten und den Kontaktbereichen einer Gruppe während des Kopplungsvorgangs in einer bestimmten Reihenfolge für einen vorgegebenen Drehwinkel hergestellt werden. Erreicht wird damit, dass Steuerbaugruppen zur Steuerung der Anordnung in einer bestimmten Reihenfolge angesprochen werden, wodurch sich eine bestimmte Steuersequenz durch den Koppelvorgang auslösen lässt.

Ist das Leistungsübertragungselement zur Übertragung einer elektrischen Leistung zwischen zwei Einheiten vorgesehen, wobei die eine Einheit einen Elektromotor und die andere Einheit ein Akkumulatorelement beinhaltet, hat es sich als einfach, preisgünstig, funktionssicher und damit vorteilhaft erwiesen, die Anordnung mit den nachfolgend aufgeführten Merkmalen auszustatten. Der erste Anschluss des Elektromotors und der erste Anschluss des Akkumulatorelementes sind jeweils mit dem Gehäuse der den Elektromotor bzw. der das Akkumulatorelementes aufnehmenden Einheit direkt oder indirekt leitend verbunden. Die Gehäuse einerseits und die daran angeordneten Verschlussteilbaugruppen andererseits sind so ausgebildet, dass die Gehäuse im gekoppelten Zustand durch die Verschlussteilbaugruppen elektrisch leitend verbunden sind. Die erste Leistungsübertragungsbaugruppe weist einen elektrisch nicht leitenden Kontaktfingerträger und einen an diesem angeordneten elektrisch leitenden Kontaktfinger auf, wobei der Kontaktfingerträger an der positiven Verschlussteilbaugruppe und der Kontaktfinger an dem Kontaktfingerträger so angeordnet ist, dass der Kontaktfinger sich in seiner Längserstreckung koaxial zur Drehachse erstreckt. Die zweite Leistungsübertragungsbaugruppe besteht aus einem elektrisch nicht leitenden Gegenkontaktträger und einem an diesem angeordneten elektrisch leitenden Gegenkontakt, wobei der Gegenkontaktträger an der negativen Verschlussteilbaugruppe und der Gegenkontakt elektrisch isoliert an dem Gegenkontaktträger so angeordnet sind, dass der Gegenkontakt koaxial zur Drehachse angeordnet ist.

In weiterer vorteilhafter Ausbildung kann vorgesehen sein den Gegenkontakt als Buchse auszubilden und den Kontaktfinger und die Buchse an den Verschlussteilbaugruppen zueinander so anzuordnen, dass der Kontaktfinger beim Ineinanderstecken der positiven Verschlussteilbaugruppe in die negative Verschlussteilbaugruppe in die Buchse eindringt. Dabei kann es besonders vorteilhaft sein, den Kontaktfinger in Zusammensteckrichtung im Wesentlichen starr auszubilden. Weiter kann es von besonderem Vorteil sein, an der Buchse eine Zentriereinrichtung in Form eines Trichters vorzusehen, so dass der Kontaktfinger beim Zusammenstecken zentriert wird.

In einer alternativen vorteilhaften Ausgestaltungsvariante ist der Kontaktfinger in seiner Längsrichtung federnd ausgebildet und der Gegenkontakt ist als Schleifkontakt ausgebildet. Unter "federnd ausgebildet" ist hierbei zu verstehen dass der Kontaktfinger selbst federnd ausgebildet oder federgelagert ist. Der Kontaktfinger und der Schleifkontakt sind jeweils über die elektrisch isolierenden Kontaktträger an den Verschlussteilbaugruppen zueinander so angeordnet, dass der Kontaktfinger beim Ineinanderstecken der positiven Verschlussteilbaugruppe in die negative Verschlussteilbaugruppe am Schleifkontakt unter Federspannung anliegt. Auch hier kann es vorteilhaft sein, an dem Schleifkontakt eine Zentriereinrichtung in Form eines Trichters und/oder einer balligen Vertiefung vorzusehen, so dass der Kontaktfinger beim Zusammenstecken zentriert wird.

Um Kontaktfinger und Gegenkontakt im nicht gekoppelten Zustand gegen mechanische Einflüsse und Kurzschluss zu schützen ist es vorteilhaft, wenn der Kontaktfinger und/oder der Gegenkontakt von einem ringförmigen Wulst umgeben sind, derart, dass der jeweilige Wulst in Koppelrichtung von Kontaktfinger und Gegenkontakt gesehen zumindest die Höhe des Kontaktfingers und/oder des Gegenkontakts aufweist. Sind sowohl am Kontaktfinger als auch am Gegenkontakt Wülste vorhanden, sind diese so ausgebildet, dass der freie Durchmesser der ringförmigen Wülste so bemessen ist, dass beim Ineinanderstecken der Verschlussbaugruppen der eine Wulst den anderen Wulst ringförmig umschließt.

Ist das Leistungsübertragungselement zur Übertragung einer mechanischen Leistung zwischen zwei Einheiten vorgesehen, wobei die eine Einheit einen Elektromotor und die andere Einheit ein Getriebeelement beinhaltet, hat es sich ebenfalls als einfach, preisgünstig, funktionssicher und damit vorteilhaft erwiesen, das Leistungsübertragungselement mit den nachfolgend aufgeführten Merkmalen auszustatten. Die erste Leistungsübertragungsbaugruppe besteht aus einer koaxial zur Drehachse auf einer Antriebswelle des Getriebes angeordneten Motorritzelaufnahme, die die positive Verschlussteilbaugruppe koaxial durchragt.

Die zweite Leistungsübertragungsbaugruppe besteht aus einem koaxial zur Drehachse auf einer Abtriebswelle des Elektromotors angeordneten Motorritzel, das die negative Verschlussteilbaugruppe koaxial durchragt. Dabei sind die Motorritzelaufnahme auf der Antriebswelle des Getriebeelementes und das Motorritzel auf der Abtriebswelle des Elektromotors jeweils drehfest so angeordnet, dass sie in Verschlussposition der Verschlussbaugruppe drehfest ineinander greifen. Abweichend von der vorstehend beschriebenen Anordnung können die jeweiligen Positionen von Motorritzelaufnahme und Motorritzel vertauscht sein, derart, dass das Motorritzel auf der Antriebswelle des Getriebeelementes und die Motorritzelaufnahme auf der Abtriebswelle des Elektromotors jeweils drehfest angeordnet sind.

Durch die vorstehend offenbarten Merkmale ist eine Anordnung zur Leistungs- und Signalübertragung zwischen wenigstens zwei koppelbaren Einheiten offenbart, die bei gleich ausgebildeter mechanischer Kopplung und gleich ausgebildeter Signalübertragung alternativ so ausgestattet werden kann, dass elektrische Leistung oder mechanische Leistung übertragbar ist. Somit lassen sich durch die Nutzung von Gleichteilen jeweils für die Verschlussbaugruppe als auch die Signalübertragungseinheit erhebliche Einsparungen erzielen.

Weitere Ausgestaltungen und Vorteile der Erfindung werden nachfolgend anhand der Zeichnung näher erläutert, es zeigen:
- Fig.1: Eine Explosionszeichnung einer Antriebseinrichtung perspektivisch in Teildarstellung
- Fig. 2: Eine Explosionszeichnung einer positiven Verschlussteilbaugruppe mit Anbauten perspektivisch
- Fig. 3: Schnittdarstellung einer verbundenen Verschlussbaugruppe mit geschnittener Federkontaktleiste
- Fig. 4a: Schnittdarstellung einer positiven Verschlussteilbaugruppe mit erster Leistungsübertragungsbaugruppe
- Fig. 4b: Perspektivische Darstellung der Anordnung gemäß Fig. 4a mit Sicht auf die positive Verschlussteilbaugruppe
- Fig. 5a: Schnittdarstellung einer negativen Verschlussteilbaugruppe mit zweiter Leistungsübertragungsbaugruppe
- Fig. 5b: Perspektivische Darstellung der Anordnung gemäß Fig. 5a mit Sicht auf die negative Verschlussteilbaugruppe
- Fig. 6: Zusammenbau der Anordnungen gemäß Fig. 4a und Fig. 5a
- Fig. 7: Zusammenbau einer positiven Verschlussteilbaugruppe mit einer ersten Leistungsübertragungsbaugruppe in alternativer Ausführung und einer negativen Verschlussteilbaugruppe mit einer zweiten Leistungsübertragungsbaugruppe in alternativer Ausführung in Schnittdarstellung (vergrößerte Detaildarstellung des Leistungsübertragungselementes)
- Fig. 8a bis Fig. 8e: Phasendarstellung des Kopplungsvorgangs der Signalübertragungseinheit in Draufsicht schematisch

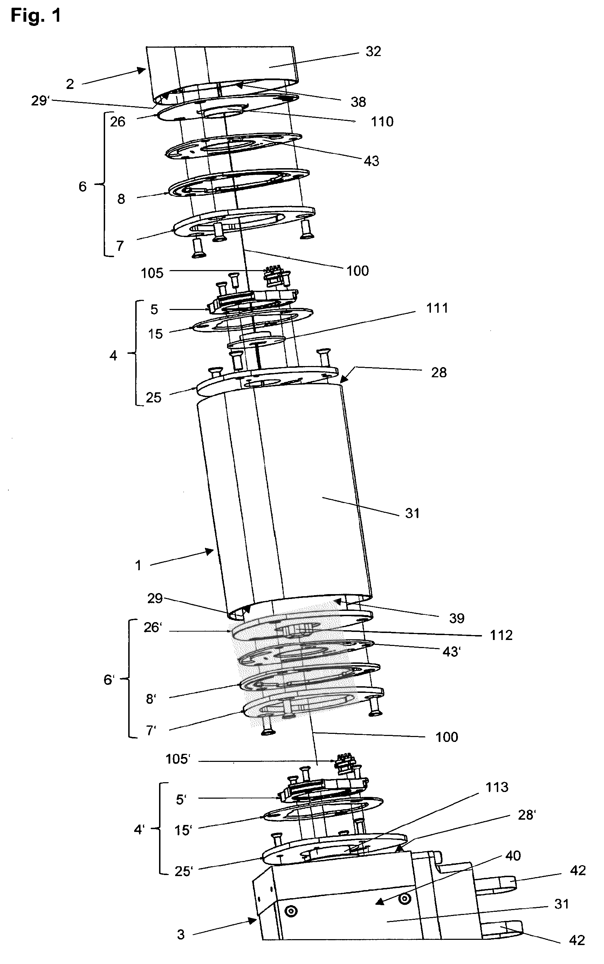

Die erfindungsgemäße Anordnung zur Leistungs- und Signalübertragung ist nachfolgend beispielhaft anhand eines Steckantriebs für Fahrräder näher beschrieben. Wie in Fig. 1 ersichtlich besteht dieser Antrieb aus einer ein Getriebeelement 40 aufnehmenden dritten Einheit 3, einer einen Elektromotor 39 aufnehmenden ersten Einheit 1, sowie einer ein Akkumulatorelement 38 aufnehmenden zweiten Einheit 2. Die Elemente 38, 39, 40 sind in Gehäusekörpern 31, 32, 33 aufgenommen und an den Stirnseiten 28, 28', 29, 29' mit den Verschlussteilbaugruppen 4, 4', 6, 6' versehen. Über die Verschlussteilbaugruppen 4, 4', 6, 6' können die Einheiten 1, 2, 3 lösbar miteinander stabförmig oder in Reihe verbunden werden, so dass die erste Einheit 1 mit ihrem ersten Ende mit der Einheit 3 und mit dem zweiten, gegenüberliegenden Ende mit der Einheit 2 verbunden ist. Die Einheit 2 ist damit mittelbar über die Einheit 1 mit der Einheit 3 verbunden. Die Einheit 3 ist über eine Befestigungsvorrichtung 42 (zum Beispiel Schellen) mit dem Fahrradrahmen (nicht dargestellt) verbunden, so dass die erste Einheit 1 und über diese mittelbar auch die dritte Einheit 3 durch die Befestigungsvorrichtung 42 an dem Fahrradrahmen (nicht dargestellt) befestigt ist.

Die lösbare Verbindung der Einheiten 1, 2, 3 erfolgt über einen Bajonettverschluss, der durch das Zusammenwirken der ineinander greifenden Verschlussteilbaugruppen 4, 4', 6, 6' realisiert wird. Die Verschlussteilbaugruppen 4, 4', 6, 6' sind hierbei scheibenförmig aufgebaut, und sandwichtartig zusammengesetzt. Die einzelnen Bauteile der Verschlussteilbaugruppen 4, 4', 6, 6' sind für die erste, positive Verschlussteilbaugruppe 4, 4' ein Eingriffselement 5, 5', ein Gleitelement 15, 15' sowie eine erste Adapterplatte 25, 25' und für die zweite, negative Verschlussteilbaugruppe 6, 6' ein Hinterschnittelement 7, 7', ein Federelement 8, 8' sowie ein zweites Adapterelement 26, 26'.

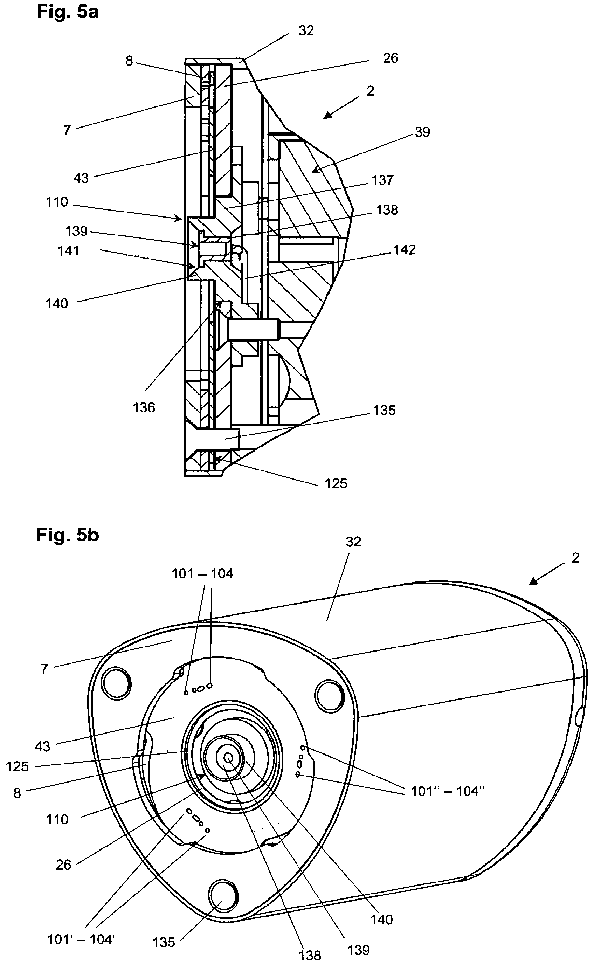

Die negative Verschlussteilbaugruppe 6, 6' weist ein zwischen Federelement 8, 8' und zweitem Adapterelement 26, 26' angeordnetes Platinenelement 43, 43' auf. Auf dem die zweite Signalübertragungsbaugruppe ausbildendem Platinenelement 43, 43' ist für die steuerungstechnische Verbindung der Einheiten 1, 2, 3 eine Gruppen von Kontaktbereichen 101 bis 104, 101' bis 104', 101" bis 104" (in Fig. 1 nicht erkennbar vgl. hierzu Fig. 5a) angeordnet, die sich auf zur Mittelachse (Drehachse 100 beim Lösen bzw. Verbinden der Einheiten 1, 2, 3) konzentrischen Kreisbahnen befinden, wie dies unten noch ausführlich beschrieben ist.

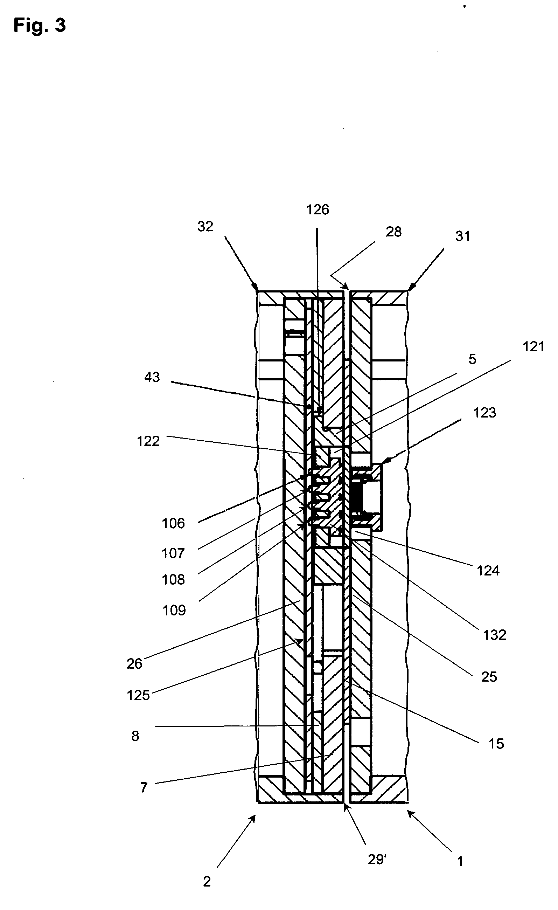

Die positive Verschlussteilbaugruppe ist, ebenfalls zur steuerungstechnischen Verbindung der Einheiten 1, 2, 3, mit einer erste Signalübertragungsbaugruppe in Form einer Federkontaktleiste 105 ausgestattet, die in dem Eingriffselement 5, 5' angeordnet und gehalten ist. Die Kontaktfederleiste 105 weist Federkontakte 106, 107, 108, 109 in Form von gefederten Kontaktfingen (siehe hierzu auch die Detaildarstellung in Fig. 3) auf, die sich ebenfalls auf zur Mittelachse (Drehachse 100 beim Lösen bzw. Verbinden der Einheiten 1, 2, 3) konzentrischen Kreisbahnen befinden, wie dies ebenfalls unten noch ausführlich beschrieben ist.

Die Einheiten 1, 2, 3 können im zusammengebauten Zustand durch das Ausführen einer relativen Drehbewegung der Einheiten 1, 2, 3 relativ zueinander um die Drehachse 100 von einer Verschlussstellung in eine Offenstellung überführt werden. Während der Drehbewegung muss ein Widerstand - ein Drehmoment- überwunden werden. Nach erfolgter Drehbewegung sind die jeweiligen Einheiten 1, 2, 3 durch eine lineare Bewegung voneinander wegzubewegen. Die Verbindung der Einheiten 1, 2, 3 erfolgt in umgekehrter Reihenfolge.

Wie ferner aus der Fig. 1 ersichtlich, sind die Bauteile der positiven, ersten Verschlussteilbaugruppe 4, 4' in wesentlichen Teilen identisch ausgebildet, dies gilt auch für die Bauteile der zweiten, negativen Verschlussteilbaugruppe 6, 6'. Ebenfalls Baugleichheit besteht zwischen dem Platinenelement 43 an der zweiten Einheit 2 und dem Platinenelement 43' an der ersten Einheit 1, sowie zwischen der Federkontaktleiste 105 an der ersten Einheit 1 und der Federkontaktleiste 105' an der dritten Einheit 3.

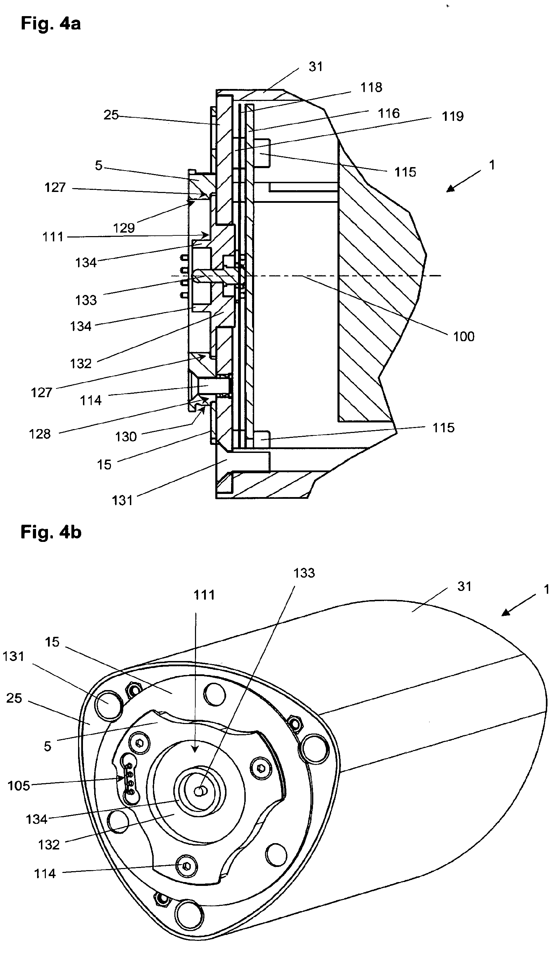

Zur Übertragung von Leistung zwischen den Einheiten 1, 2, 3, sei es elektrische Leistung in Form eines elektrischen Stromes oder mechanische Leistung in Form eines Drehmoments, sind jeweils zentrisch an den Einheiten 1, 2, 3 Leistungsübertragungsbaugruppen 110, 111, 112, 113 vorgesehen. Die zweite Leistungsübertragungsbaugruppe 110 an der zweiten Einheit 2 und die erste Leistungsübertragungsbaugruppe 111 an der ersten Einheit 1 bilden dabei im verbundenen Zustand der ersten Einheit 1 mit der zweiten Einheit 2 ein erstes Leistungsübertragungselement aus, das elektrische Leistung von der zweiten Einheit 2, die das Akkumulatorelement 38 enthält, zu der ersten Einheit 1, die den Elektromotor 39 enthält überträgt. Die Rückleitung des Stromkreises wird dabei durch die Verschlussteilbaugruppe 4 und die Verschlussteilbaugruppe 6 gebildet die aus elektrisch leitendem Material bestehen und an den ebenfalls elektrisch leitenden ausgebildeten Gehäusen der ersten Einheit 1 (Verschlussteilbaugruppe 4) und der zweiten Einheit 2 (Verschlussteilbaugruppe 6) angeordnet sind. Der Stromkreis wird bei gekoppelter erster Einheit 1 und zweiter Einheit 2 dadurch gebildet, dass das Akumulatorelement 38 mit einem Anschluss (nicht dargestellt) direkt oder indirekt am Gehäuse 32 der zweiten Einheit 2 angeschlossen ist und mit dem anderen Anschluss (nicht dargestellt), gegebenenfalls über Schalt und/ oder Regelelemente (nicht dargestellt), an der zweiten Leistungsübertragungsbaugruppe 110 (vgl. Fig. 5a) und dass der Elektromotor 39 ebenfalls direkt oder indirekt mit dem Gehäuse 31 der ersten Einheit 1 einerseits und mit der ersten Leistungsübertragungsbaugruppe 111 (vgl. Fig. 4a), gegebenenfalls über Schalt- und/ oder Regelelemente (nicht dargestellt), leitend verbunden ist. Die Gehäuse der Einheiten 1, 2, 3 bilden dabei im gekoppelten Zustand das gemeinsame Masse-Potential und die Leistungsübertragungsbaugruppe 110, 111 bewerkstelligen die Verbindung des Pluspols.

Zur Übertragung mechanischer Leistung in Form eines Drehmomentes ist ein zweites Leistungsübertragungselement vorgesehen, das im verbundenen Zustand der ersten Einheit 1 mit der dritten Einheit 3 ausgebildet ist und aus einer ersten Leistungsübertragungsbaugruppe in Form eines Motorritzels 112 und einer dieses drehfest aufnehmende zweiten Leistungsübertragungsbaugruppe in Form einer Motorritzelaufnahme 113 besteht. Das Motorritzel 112 ist dabei auf der Abtriebswelle (nicht dargestellt) des Elektromotors 39 drehfest angeordnet während die Motorritzelaufnahme 113 drehfest auf der Antriebswelle (nicht dargestellt) des Getriebes 40 befestigt ist.

Bezüglich der nachfolgenden Beschreibung der weiteren Figuren ist zu beachten, dass zur besseren Orientierung immer wieder auf die Darstellung gemäß Fig. 1 zurückgegriffen, ohne dass dies in der Beschreibung eigens erwähnt ist. Die Fig. 1 ist also stets mit zu betrachten.

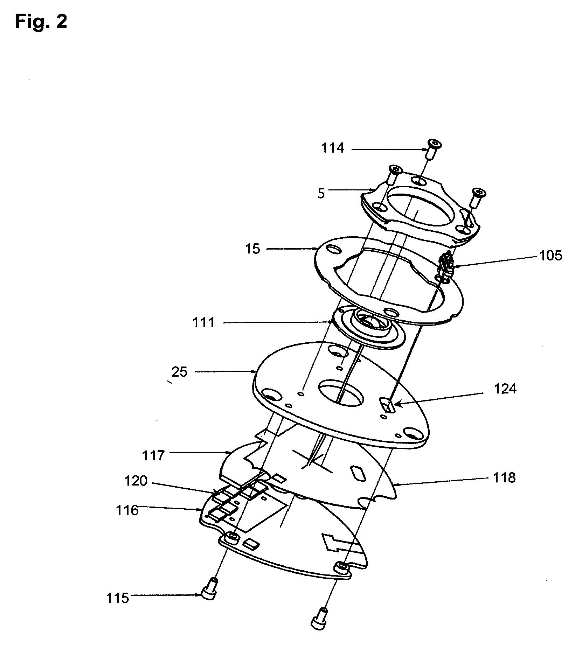

Eine positive Verschlussteilbaugruppe mit weiteren Anbauten zeigt Fig. 2. Es handelt sich dabei um die Verschlussteilbaugruppe 4 die gemäß Fig. 1 an dem ersten Element 1 angeordnet ist. Zentrales Element ist die Adapterplatte 25 auf deren einer Seite die erste Leistungsübertragungsbaugruppe 111, das Gleitelement 15, die Federkontaktleiste 105 und das Eingriffselement 5 mittels Schrauben 114 befestigbar sind. Dabei werden sowohl die erste Leistungsübertragungsbaugruppe 111 als auch das Gleitelement 15 und die Federkontaktleiste 105 zwischen dem Eingriffselement 5 und der Adapterplatte 25 gehalten, wie dies unten noch näher erläutert ist.

Auf der gegenüberliegenden Seite der Adapterplatte 25 ist unter Zwischenlage einer Wärmeleitplatte 117 und einer Isolierfolie 118 eine Steuerplatine 116 mittels Schrauben 115 befestigbar. Die Steuerplatine 116 wird dabei im montierten Zustand durch Abstandhalter 119 auf Abstand zur Adapterplatte 25 gehalten und die elastisch verformbar ausgebildete Wärmeleitplatte 117 ist zwischen den elektronischen Bauteilen 120 auf der Steuerplatine 116 und der Adapterplatte 25 eingeklemmt, die Isolierfolie 118 liegt auf der Adapterplatte 25 auf. Die Adapterplatte 25 mit den vorstehend beschriebenen Anbauten lässt sich als Baugruppe vorfertigen und bei der Endmontage als Ganzes mittels Schrauben an dem Gehäuse 31 befestigen (siehe hierzu auch Fig. 4a).

In Fig. 3 ist in geschnittener Teildarstellung ein Schnitt durch den Kopplungsbereich der ersten Einheit 1 mit der zweiten Einheit 2 gezeigt, die Einheiten sind zusammengekoppelt, der Schnitt verläuft mittig durch die Federkontaktleiste 105. In der Darstellung rechts ist der Kopplungsteil der ersten Einheit 1 und in der Darstellung links der Kopplungsteil der zweiten Einheit 2 gezeigt. Bei der Darstellung der Federkontaktleiste 105 in der Fig. 3 ist zu beachten, dass diese wie aus der Schraffur erkennbar als Ganzes geschnitten dargestellt ist, das ändert natürlich nichts an dem nachfolgend im Detail dargestellten Aufbau dieses Bauteils aus Einzelteilen.

Der zur ersten Einheit 1 gehörende Teil besteht aus der im Gehäuse 31 gehaltenen Adapterplatte 25, an der unter Zwischenlage des Gleitelementes 15 das Eingriffselement 5 befestigt ist. In dem Eingriffselement 5 ist eine Aussparung 121 vorgesehen, in der der aus Isoliermaterial bestehende Kontakthalter 122 der Federkontaktleiste 105 form- oder kraftschlüssig gehalten ist. In dem Kontakthalter sind die Federkontakte 106 bis 109 ihrerseits formschlüssig gehalten. Die Federkontakte sind in ihrer Längsrichtung federnd ausgebildet. Auf der den Federkontakten 106 bis 109 gegenüberliegenden Seite ist die Federkontaktleiste 105 als Steckerleiste 123 ausgebildet, an die zur Kontaktierung ein Gegenstück (nicht dargestellt) ansteckbar ist. Die Steckerleiste 123 der Federkontaktleiste 105 durchragt eine Aussparung 124 in der Adapterplatte 25. Die vorstehend beschriebene Federkontaktleiste 105 ist im Handel erhältlich, so dass sich weitere Ausführungen hierzu erübrigen.

Der zur zweiten Einheit 2 gehörende Teil der Kopplungsteile besteht aus einer Adapterplatte 26 an der, in der Zeichnung nach rechts gesehen, eine Isolierfolie 125, das Platinenelement 43, das Federelement 8 und das Hinterschnittelement 7 angeordnet sind. Diese sandwichartige Baugruppe ist mittels Schrauben (hier nicht dargestellt) an der Stirnseite 29' des Gehäuses 32 befestigt.

Wie weiter aus der Darstellung in Fig. 3 ersichtlich, hintergreift das Eingriffselement 5 das Hinterschnittelement 7 an mehreren Stellen, von denen in der Darstellung nur eine Hintergriffstelle 126 sichtbar ist, so dass die beiden Einheiten 1, 2 über ihre Kopplungsteile eng aneinander liegend zueinander fixiert sind. In dieser Verschlussposition liegen die Federkontakte 106, 107. 108, 109 an dem Platinenelement 43 unter Federspannung an und kontaktieren dort die in der Darstellung nicht sichtbaren Kontaktbereiche 101 bis 104 oder 101' bis 104' oder 101" bis 104" der Gruppe von Kontaktbereichen die in der gegebenen Kopplungsstellung (von den drei möglichen Kopplungsstellungen) den Federkontakten 106, 107. 108, 109 gegenüber liegen.

Die Darstellung gemäß Fig. 4a zeigt in Teildarstellung einen Schnitt durch die positive Verschlussteilbaugruppe 4 wobei die Schnittebene längs durch die Mitte der Anordnung entlang der Drehachse 100 verläuft. Zentrales Element ist, wie zu Fig. 2 bereits ausgeführt, die Adapterplatte 25 auf deren in der Zeichnung linken Seite, das Gleitelement 15, die ersten Leistungsübertragungsbaugruppe 111 und das Eingriffselement 5 mittels Schrauben 114 befestigt sind. Dabei werden die erste Leistungsübertragungsbaugruppe 111 durch eine umlaufende Schulter 127 am inneren Rand 129 des Eingriffselementes 5 und das Gleitelement 15 durch Schultern 128 am äußeren Rand 130 des Eingriffselementes 5 in ihrer Position zwischen dem Eingriffselement 5 und der Adapterplatte 25 gehalten.

Auf der gegenüberliegenden Seite der Adapterplatte 25 ist unter Zwischenlage einer Wärmeleitplatte 117 (in der Darstellung nicht sichtbar) und einer Isolierfolie 118 die Steuerplatine 116 mittels Schrauben 115 befestigt. Die Steuerplatine 116 wird dabei im montierten Zustand durch Abstandhalter 119 auf Abstand zur Adapterplatte 25 gehalten. Die Adapterplatte 25 mit den vorstehend beschriebenen Anbauten ist mittels Schrauben 131 an der Stirnseite 28 der Gehäuse 31 der ersten Einheit 1 befestigt.

Das erste Leistungsübertragungselement 111 besteht aus einem Kontaktträger 132, der aus elektrisch isolierendem Material besteht und einem darin zentrisch angeordneten Kontaktfinger 133. Der Kontaktträger 132 weist einen Ansatz auf, der sich in Richtung auf die Steuerplatine 116 hin erstreckt und eine Ausnehmung in der Adapterplatte 25 durchragt. Die gegenüberliegende Seite des Kontaktträgers 132 weist einen Wulst 134 auf, der den Kontaktfinger 133 beabstandet kreisförmig umschließt und dessen Höhe der Höhe des Kontaktfingers 133 entspricht, wobei der Wulst 134 und der Kontaktfinger 133 die zentrale Öffnung in dem Eingriffselement 5 nahezu ganz durchragen. Auf der der Steuerungsplatine 116 zugewandten Seite ist der Kontaktfinger 133 so ausgebildet, dass er an diese anschließbar ist. Dabei kann vorgesehen sein, dass diese Seite des Kontaktfingers die Form eines Steckkontaktes aufweist, der im montierten Zustand in eine an der Steuerplatine 116 angeordneten Buchse (nicht dargestellt) eingesteckt ist.

Die gleiche Anordnung in perspektivischer Darstellung ist in Fig. 4b gezeigt. Da in beiden Darstellungen das Gleiche nur aus unterschiedlichen Perspektiven gezeigt ist, wird auf die vorstehende Beschreibung Bezug genommen. Am Gehäuse 31 ist stirnseitig die vorstehend beschriebene Adapterplatte 25 mittels Schrauben 131 befestigt. Die Adapterplatte 25 trägt jeweils zentrisch angeordnet, das Gleitelement 15, die erste Leistungsübertragungsbaugruppe 111 und das Eingriffselement 5. Die vorstehend angesprochenen sandwichartig geschichteten Bauteile sind mittels der Schrauben 114 an der Adapterplatte 25 befestigt. Weiter ist erkennbar, dass in einer Ausnehmung in dem, Eingriffselement 5 die Kontaktfederleiste 105 angeordnet ist. In einer zentrischen Ausnehmung im Eingriffselement ist erkennbar, dass der Kontaktfinger 133 von dem konzentrisch zu diesem am Kontaktträger 132 angeordneten Wulst 134 ringförmig umschlossen ist.

Analog zur Darstellung 4a zeigt Fig. 5a in Teildarstellung einen Schnitt durch die negative Verschlussteilbaugruppe 6, wobei auch hier die Schnittebene längs durch die Mitte der Anordnung entlang der Drehachse 100 verläuft. Zentrales Element ist hier die Adapterplatte 26 auf deren in der Zeichnung linken Seite, eine Isolierfolie 125 das Platinenelement 43, das Federelement 8 und das Hinterschnittelement 7 angeordnet ist. Dieser sandwichartige Aufbau ist mittels Schrauben 135 an der Stirnseite 29 des Gehäuses 32 der zweiten Einheit 2 befestigt. In einer zentrisch in der Adapterplatte 26 angeordneten Ausnehmung 136 ist die zweite Leistungsübertragungsbaugruppe 110 form- oder kraftschlüssig gehalten. Diese besteht aus einem Gegenkontaktträger 137 aus elektrisch nicht leitendem Material, in dem zentrisch ein Kontakt in Form einer Buchse 138 angeordnet ist, die Buchse 138 ist auf ihrer der Buchsenöffnung 139 abgewandten Seite direkt oder indirekt über eine Leitung 142 mit einem Anschluss (nicht dargestellt) des Akkumulatorelementes 39 verbunden. Rund um die Buchsenöffnung 139 weist der Gegenkontaktträger 137 einen Wulst 140 auf, der die Buchsenöffnung 139 überragt und zu dieser hin schräg abfällt, so dass ein zur Buchsenöffnung 139 hin mündender Zentriertrichter 141 ausgebildet ist. Weiter ist der Gegenkontaktträger 137 mit seinem Wulst 140 so ausgebildet, dass der Wulst 140 die zentralen Ausnehmungen in dem Federelement 8 ganz und die zentralen Ausnehmungen in dem Hinterschnittelement 7 nahezu ganz durchragt.

Analog zu der Fig. 4b zeigt Fig. 5b die Anordnung aus Fig. 5a in perspektivischer Darstellung. Da in beiden Darstellungen Fig. 5a und Fig. 5b das Gleiche nur aus unterschiedlichen Perspektiven gezeigt ist, wird auf die vorstehende Beschreibung Bezug genommen. An der Stirnseite 29 des Gehäuses 32 ist mittels Schrauben 135 der sandwichartige Aufbau aus Adapterplatte 26, Isolierfolie 125, Platinenelement 43, Federelement 8 und Hinterschnittelement 7 befestigt. Im Zentrum der Stirnfläche 29 ist die Leistungsübertragungsbaugruppe 110 erkennbar, die im Gegenkontaktträger 137 die Buchse 138 trägt. Der Gegenkontaktträger 137 weist den die Buchsenöffnung 139 umgebenden Wulst 140 auf, der zur Buchsenöffnung hin als Zentriertrichter 141 ausgebildet ist. Weiter ist in der Fig. 5b erkennbar, dass sich auf dem Platinenelement 43 innerhalb der zentrischen Öffnung im Hinterschittelement 7 drei Gruppen von Kontaktbereichen befinden, nämlich die Kontaktbereiche 101 bis 104, die Kontaktbereiche 101' bis 104' und die Kontaktbereiche 101" bis 104". Der Umstand, dass drei Gruppen von Kontaktbereichen benötigt werden ist der Maßgabe geschuldet, dass die erste Einheit 1 und die zweite Einheit 2 in drei unterschiedlichen, zueinander um 120° versetzten Positionen koppelbar sein sollen.

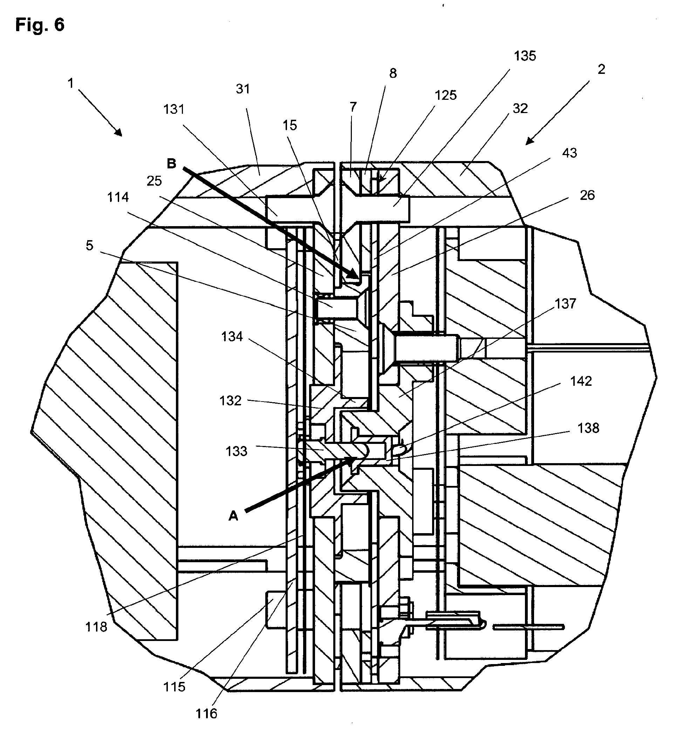

Werden das erste Element 1 und das zweite Element 2, jeweils wie diese in den Figuren 4a und 5a bzw. den Figuren 4b und 5b gezeigt sind, durch Ineinanderstecken und Verdrehen verbunden, ergibt sich ein Zusammenbau, wie ihn Fig. 6 (analog zu den Figuren 4a und 5a) in Schnittdarstellung zeigt. Auch diese Darstellung ist als Teildarstellung ausgeführt, der Schnitt verläuft längs durch die Mitte der gekoppelten positiven Verschlussteilbaugruppe 4 und negative Verschlussteilbaugruppe 6 entlang der Drehachse 100 (siehe hierzu auch Fig. 1). Nachdem die Darstellung gemäß Fig. 6 lediglich ein Zusammenbau der in den Figuren 4a und 5a gezeigten Elemente 1, 2 ist, die Bauteile und damit die Bezugszeichen also identisch sind, enthält Fig. 6 zwar alle Bezugszeichen die sich auch in den Figuren 4a und 5a finden, es sind aber in der nachfolgenden Beschreibung nur die für den Zusammenbau wesentlichen Aspekte behandelt. Hinsichtlich aller übrigen Aspekte wird, um Wiederholungen zu vermeiden, auf die Beschreibung zu den Figuren 4a und 5a verwiesen.

Die Anordnung aus erstem Element 1 und zweitem Element 2 wird mechanisch durch das Zusammenwirken von Eingriffselement 5 und Hinterschnittelement 7 zusammengehalten, indem das Eingriffselement 5, nach dem Einstecken der positiven Verschlussteilbaugruppe 4 in die negative Verschlussteilbaugruppe 6 und dem anschließenden Verdrehen gegeneinander, das Hinterschnittelement 7 an mehreren Stellen hintergreift. Nachdem die mechanische Kopplung nur Mittel zum Zweck ist, nämlich um die Voraussetzung für die Übertragung einer elektrischen Leistung vom Akkumulatorelement 39 zum Elektromotor 38 zu bewerkstelligen, ist die Anordnung so ausgebildet, dass der Kontaktfinger 133, der über den Kontaktfingerträger 132 in der positiven Verschlussteilbaugruppe 4 aus Adapterplatte 25, Gleitelement 15 und Eingriffselement 5 lagert, beim Ineinanderstecken der beiden Verschlussteilbaugruppen 4, 6 in die Buchse 138 eindringt und so eine erste elektrisch leitfähige Verbindung zwischen den beiden Elementen 1 und 2 herstellt, die nach dem Verdrehen der beiden Einheiten 1 und 2 gegeneinander indirekt verriegelt ist. Wie bereits oben erwähnt ist die Buchse 138 über eine Leitung 142 direkt oder indirekt über elektrische oder elektronische Baugruppen (nicht dargestellt) mit dem Akkumulatorelement 39 verbunden, während der Kontaktfinger 133 die Steuerplatine kontaktiert und direkt oder indirekt über elektrische oder elektronische Baugruppen (nicht dargestellt) mit dem Elektromotor 38 verbunden ist. Die zur Vervollständigung des Stromkreises notwendige zweite Leitung wird, wie bereits oben ausgeführt, dadurch ausgebildet, dass der Elektromotor mit seinem zweiten Anschluss (nicht dargestellt) direkt oder indirekt mit dem Eingriffselement 5 verbunden ist und dass der zweite Anschluss (nicht dargestellt) des Akkumulatorelementes 39 direkt oder indirekt mit dem Hinterschnittelement 7 verbunden ist. Dadurch, dass Eingriffselement 5 ebenso wie das Hinterschnittelement 7 aus elektrisch leitendem Material bestehen, wird der Stromkreis durch den Kopplungsvorgang des ersten Elementes 1 mit dem zweiten Element 2 geschlossen. Die Stellen an denen die leitende Verbindung zwischen den Einheiten 1, 2 gegeben ist, kennzeichnen in der Darstellung Hinweispfeile A und B.

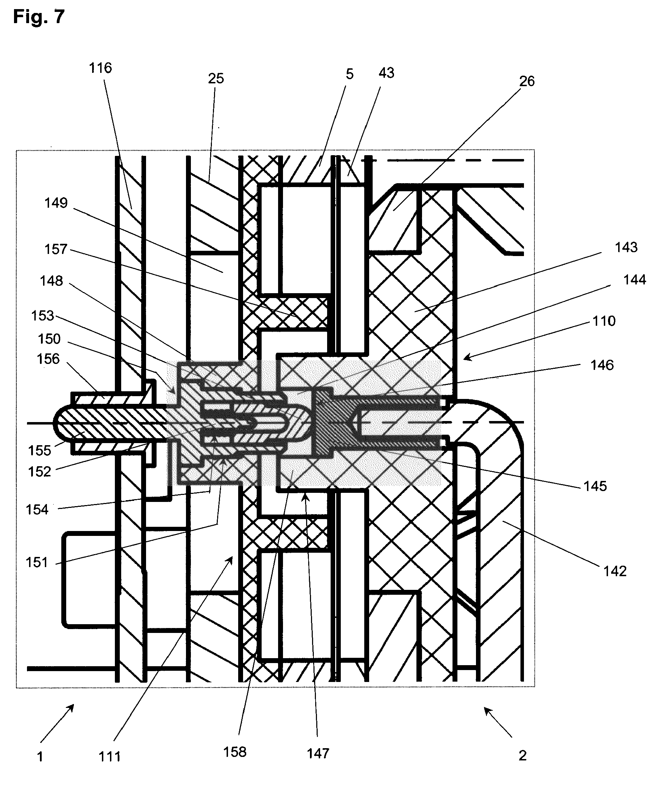

Eine von der Darstellung gemäß Figuren 4a bis 6 abweichende Ausgestaltung der Leistungsübertragungsbaugruppen 110, 111 zeigt Fig. 7 in Teildarstellung geschnitten. Die Schnittebene entspricht der in Fig. 6, die Teildarstellung erfasst nur den Bereich der Leistungsübertragungsbaugruppen 110, 111, da sich die übrigen konstruktiven Merkmale nicht von denen der Anordnung nach Fig. 6 unterscheiden. Um Wiederholungen zu vermeiden wird daher bezüglich des Gesamtaufbaus auf die Fig. 6 und die zugehörigen Beschreibungsteile verwiesen.

Bauteile mit zentraler Funktion sind wie oben bereits erwähnt die zum ersten Element 1 gehörende Adapterplatte 25 und die zum zweiten Element 2 gehörende Adapterplatte 26, diese tragen neben anderen Anbauteilen die zweite Leistungsübertragungsbaugruppe 110 (Adapterplatte 26) und die erste Leistungsübertragungsbaugruppe 111 (Adapterplatte 25). Die zweite Leistungsübertragungsbaugruppe 110 weist einen Schleifkontaktträger 143 auf, der aus elektrisch isolierendem Material besteht und an der Adapterplatte 26 form- oder kraftschlüssig so angeordnet ist, dass er eine zentrische Ausnehmung in der Adapterplatte 26 durchsetzt. Auf seiner der ersten Leistungsübertragungsbaugruppe 111 zugewandten Seite weist der Schleifkontaktträger 143 einen zentrisch angeordneten zylindrischen Ansatz 147 auf und ist von einer zentrischen Stufenbohrung 144 durchsetzt in der der Schleifkontakt 145 form- oder kraftschlüssig angeordnet ist. Durch die eine der ersten Leistungsübertragungsbaugruppe 111 zugewandten Öffnung der Stufenbohrung 144 ist die Schleifkontaktfläche 146 des Schleifkontaktes 145 zugänglich über die andere Öffnung der Stufenbohrung 144 das als Leitungsanschluss ausgebildete andere Ende des Schleifkontakts 145, das die Leitung 142 aufnimmt. Die Stufenbohrung 144 verjüngt sich in Richtung auf die Seite des Schleifkontaktträgers 143 der der ersten Leistungsübertragungsbaugruppe 111 abgewandt ist. Dadurch, dass der Schleifkontakt 145 in seinem Außendurchmesser dem Innendurchmesser der Stufenbohrung 144 entspricht wird dieser an der Verjüngungskante der Stufenbohrung 144 entgegen der auf ihn durch den Gegenkontakt wirkenden Kraft abgestützt.

Die erste Leistungsübertragungsbaugruppe 111 besteht aus einem Kontaktfederfingerträger 148, der zwischen der Adapterplatte 25 und dem Eingriffselement zentrisch gehalten ist. Der Kontaktfederfingerträger 148 durchsetzt eine zentrische Ausnehmung 149 in der Adapterplatte 25 und trägt form- oder kraftschlüssig den Kontaktfederfinger 150. Dieser ist auf seiner der zweiten Leistungsübertragungsbaugruppe 110 zugewandten Seite nach Art einer Teleskopfeder ausgebildet, wobei in einem hülsenförmigen Ansatz 151 auf einem Dorn 152 eine Kontaktkappe 153 unter Wirkung der Feder 154 lagert. Der Federweg der Feder 154 ist so bemessen, dass nach dem Verbinden der Einheiten 1, 2 (zum Verbindungsvorgang wird auf die obenstehende Beschreibung verwiesen), wie in der Figur 7 dargestellt, die Kontaktkappe 153 auf der Schleifkontaktfläche 146 kraftbeaufschlagt durch die Feder 154 aufliegt. Zur Kontaktierung weist der Kontaktfederfinger 150 auf seiner der zweiten Leistungsübertragungsbaugruppe 110 abgewandten Seite einen Steckeransatz 155 auf, der mit einer Durchgangsbuchse 156 zusammenwirkt die in der Steuerungsplatine 116 angeordnet und mittels Leiterbahn (nicht dargestellt) kontaktiert ist.

Sowohl um den Kontaktfederfinger 150 als auch um die Schleifkontaktfläche 146 sind Wülste zum Schutz angeordnet, es sind dies der erste Wulst 157, der an dem Kontaktfederfingerträger 148 angeordnet ist und den Kontaktfederfinger 150 koaxial ringförmig umschließt und der zweite Wulst 158, der am Schleifkontaktträger 143 angeordnet ist und die Schleifkontaktfläche 146 koaxial ringförmig umschließ. Der Innendurchmesser des ersten Wulstes 157 und der Außendurchmesser des zweiten Wulstes 158 sowie die Höhe der Wülste 157, 158 sind so bemessen, dass diese im Zusammenbau der ersten Einheit 1 mit der zweiten Einheit 2 wie in Fig. 6 gezeigt ineinander greifen, dabei wird der zweite Wulst 158 vom ersten Wulst 157 ringförmig umschlossen.

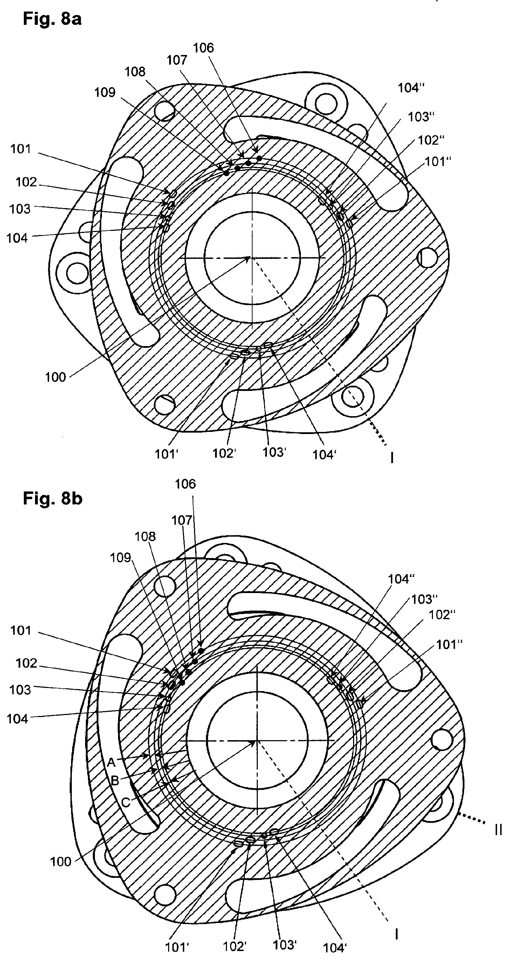

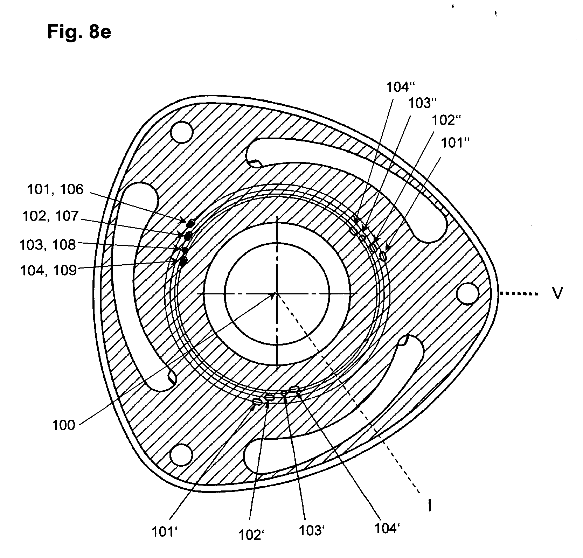

Zur Verdeutlichung der Verhältnisse beim Verbinden der ersten Signalübertragungsbaugruppen 105, 105' mit den zweiten Signalbaugruppen 43, 43' beim Koppeln der ersten Einheit 1 mit der zweiten Einheit 2 bzw. beim Koppeln der ersten Einheit 1 mit der dritten Einheit 3 wird nachfolgend der Ablauf anhand der Figuren 8a bis 8 e, die den Ablauf in Phasen darstellen, aufgezeigt. Da in beiden Fällen, also bei der Kopplung der ersten Einheit 1 mit der zweiten Einheit 2 bzw. beim Koppeln der ersten Einheit 1 mit der dritten Einheit 3 der Ablauf identisch ist, wird zur Vereinfachung nachfolgend nur auf die Kopplung der ersten Einheit 1 mit der zweiten Einheit 2 Bezug genommen. Die Verhältnisse bei der Kopplung der ersten Einheit 1 mit der dritten Einheit 3 sind daraus unschwer ableitbar. Den Figuren 8a bis 8e ist gemeinsam, dass die erste Einheit 1 im Bildhintergrund in Draufsicht gezeigt ist, während die zweite Einheit 2 davor liegt. Dass die zweite Einheit 2 davor liegt ist dadurch kenntlich gemacht, dass diese gewissermaßen als Schatten schraffiert gezeigt ist. Da es bei den Darstellungen in den Fig. 8a bis 8e auf die Anordnung der Federkontakte 106, 107, 108, 109 relativ zu den Kontaktbereichen 101, 102, 103, 104 (bzw. 101', 102', 103', 104', bzw. 101", 102", 103", 104") ankommt, sind die Federkontakte 106, 107, 108, 109 als schwarze Punkte und die Kontaktbereichen 101, 102, 103, 104 bzw. 101' 102', 103', 104', bzw. 101", 102", 103", 104" als schwarz umrandete helle Flächen dargestellt.

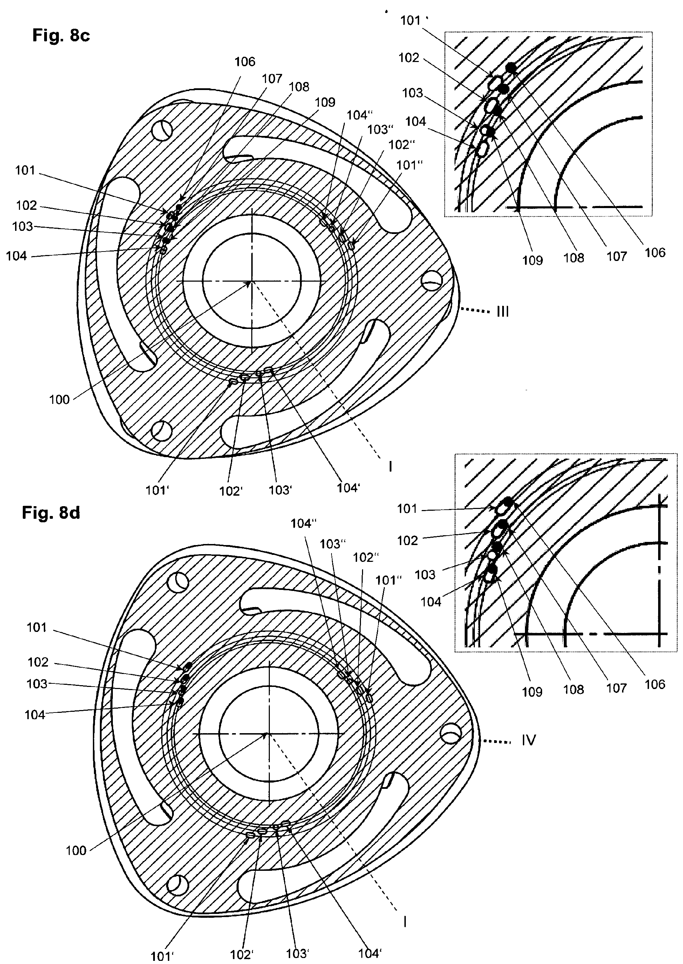

In Fig. 8a ist die Situation beim Zusammenstecken der ersten Einheit 1 mit der zweiten Einheit 2 gezeigt, wobei hier und nachfolgend nur eine von drei möglichen Steckpositionen betrachtet wird. Bei der betrachteten Steckposition befinden sich die Federkontakte in "12 Uhr Stellung" (in den anderen möglichen Steckpositionen wären sie um 120° bzw. 240° entgegen dem Uhrzeigersinn verschoben). Bezeichnet ist die Stellung mit "I". Nach dem Zusammenstecken wird die erste Einheit 1 gegenüber der zweiten Einheit 2 aus der Stellung "I" in die Stellung "II" entgegen dem Uhrzeigersinn verdreht, wie dies durch die Darstellung in Fig. 8b gezeigt ist. dabei bewegen sich die Federkontakte 106, 107, 108, 109 auf Kreisbahnen auf die Kontaktbereiche 101, 102, 103, 104 zu, die ebenfalls auf diesen Kreisbahnen liegen. Hinsichtlich der Kreisbahnen ist zu erkennen, dass diese zueinander unterschiedlich beabstandet sind. Der Abstand A zwischen den Kreisbahnen die die Federkontakte 106, 107 beschreiben sowie der Abstand B zwischen den Kreisbahnen die die Federkontakte 107, 108 beschreiben ist größer als der Abstand C zwischen den Kreisbahnen die die Federkontakte 108, 109 beschreiben. Durch die größeren Abstände A und B wird erreicht, dass die Federkontakte 106, 107, 108 nur mit den ihnen zugeordneten Kontaktbereichen 101, 102, 103 in Berührung kommen können. Dies wird in Fig. 8c deutlich, wo rechts neben der eigentlichen Darstellung der wichtige Teil im Bereich der Federkontakte 106, 107, 108, 109 bzw. Kontaktbereichen 101, 102, 103, 104 vergrößert dargestellt ist. Fig. 8c zeigt die erste Einheit 1 gegenüber der zweiten Einheit 2 aus der Stellung "I" in die Stellung "III" entgegen dem Uhrzeigersinn verdreht. In der vergrößerten rechten Darstellung ist erkennbar, dass zwischen dem Federkontakt 109 und dem Kontaktbereich 103 zwar eine Berührung stattfindet, die Federkontakte 108 und 107 die Kontaktbereich 102 und 101 beim Passieren jedoch nicht berühren. Hintergrund für die Maßnahme der unterschiedlichen Beabstandung ist, dass die Berührungen zwischen den Federkontakten 108 und 107 und den Kontaktbereichen 102 und 101 zu undefinierten bzw. ungewollten Zuständen in der Steuerung der Anordnung führen würden. Weiter ist in der Darstellung erkennbar, dass der Winkelbereich, über den sich die Kontaktbereiche 101, 102, 103, 104 ausdehnen unterschiedlich ist. Der Winkelbereich den die Kontaktbereiche 101, 102, 104 überdecken ist größer als der Winkelbereich, den der Kontaktbereich 103 überdeckt.

Wird die Einheit 1 gegenüber der Einheit 2 weiter entgegen dem Uhrzeigersinn gedreht, also von Stellung "III" in die Stellung "IV", tritt die Situation gemäß der Darstellung in Fig. 8d ein. Hier ist in dem vergrößert dargestellten Kontaktbereich rechts neben der eigentlichen Darstellung erkennbar, dass aufgrund der unterschiedlichen Winkelbereiche den die Kontaktbereiche 101, 102, 103, 104 überdecken, bzw. dem Drehwinkel bei dem die Kontaktbereiche 101, 102, 103, 104 beginnen, der Kontakt zwischen dem Federkontakt 106 und dem Kontaktbereich 101 sowie dem Federkontakt 107 und dem Kontaktbereich 102 und dem Federkontakt 109 und dem Kontaktbereich 104 bereits geschlossen ist, während der Kontakt zwischen dem Federkontakt 108 und dem Kontaktbereich 103 noch offen ist. Durch diese Maßnahme wird eine definierte Sequenz bei der Kontaktierung realisiert, so dass einerseits kein undefinierter oder ungewollter Zustand in der Steuerung der Anordnung eintreten kann und andererseits eine vorgegebene Abfolge von Steuerschritten ausgelöst wird.

Wird die erste Einheit 1 in die Endstellung, also die Stellung "V" weitergedreht, kommen einerseits die Außenkontur der Einheiten 1 und 2 zur Deckung, andererseits sind alle Verbindungen zwischen den Federkontakten 106, 107, 108, 109 und den Kontaktbereichen 101, 102, 103, 104 hergestellt.

Abweichend zu den vorstehend beschriebenen Ausgestaltungsmöglichkeiten der Signalübertragungsbaugruppen, die aus Federkontakten an der einen Signalübertragungsbaugruppe und zugeordneten Kontaktbereichen an der anderen Signalübertragungsbaugruppe aufgebaut sind, besteht - wie eingangs schon angesprochen - die Möglichkeit auch andere physikalische Prinzipien als die "leitende Verbindung" zur Signalübertragung anzuwenden. Es kann sich dabei um eine induktive Kopplung, oder eine kapazitive Kopplung zweier elektronischer Baugruppen handeln mittels der Signale zwischen den Einheiten 1, 2, 3 austauschbar sind. Selbstverständlich kommt auch ein Signalaustausch über elektromagnetische Wellen infrage, hier ist die Verwendung von Optokopplern ein allgemein übliches Prinzip. Selbstverständlich lassen sich die erwähnten Technologien auch beliebig mischen, so dass zum Beispiel eine Kombination aus Federkontakten und Optokoppleren zur Signalübertragung eingesetzt werden kann. Bei Anwendung der vorstehend angesprochenen alternativen physikalischen Prinzipien zur Signalübertragung ändert sich an der Anordnung nichts, es treten nur andere Bausteine zum Signalaustausch an die Stelle der Federkontakte bzw. an die Gruppen von Kontaktbereichen.

### Bezugszeichenliste

- 1: erste Einheit (zum Beispiel Motor)
- 2: zweite Einheit (zum Beispiel Akku)
- 3: dritte Einheit (zum Beispiel Getriebe)
- 4, 4': erste Verschlussbaugruppe
- 5, 5': Eingriffselement (v. 4, 4')
- 6, 6': zweite Verschlussbaugruppe
- 7, 7': Hinterschnittelement (v. 6, 6')
- 8, 8': Federelement
- 15, 15': Gleitelement
- 25, 25': erstes Adapterelement v. 4, 4'
- 26, 26': zweites Adapterelement v. 6, 6'
- 28: Stirnseite (rechts von 1)
- 28': Stirnseite (rechts von 3)
- 29: Stirnseite (links von 1)
- 29': Stirnseite (links von 2)
- 31: Gehäuse (von 1)
- 32: Gehäusekörper (von 2)
- 33: Gehäusekörper (von 3)
- 38: Akkumulatorelement
- 39: Elektromotor
- 40: Getriebeelement
- 43, 43': Platinenelement
- 100 bis 104: Kontaktbereiche
- 100' bis 104': Kontaktbereiche
- 100" bis 104": Kontaktbereiche
- 105: Federkontaktleiste
- 106 bis 109: Federkontakte
- 110: zweite Leistungsübertragungsbaugruppe
- 111: erste Leistungsübertragungsbaugruppe
- 112: Motorritzel
- 113: Motorritzuelaufnahme
- 114: Schrauben
- 115: Schrauben
- 116: Steuerplatine
- 117: Wärmeleitplatte
- 118: Isolierfolie
- 119: Abstandhalter
- 120: elektronische Bauteile
- 121: Aussparung (im Eingriffselement 5)
- 122: Kontakthalter
- 123: Steckerleiste
- 124: Ausnehmung (in der Adapterplatte 25)
- 125: Isolierfolie
- 126: Hintergriffstelle
- 127: umlaufende Schulter
- 128: Schulter
- 129: innerer Rand (am Eingriffselement 5)
- 130: äußerer Rand (am Eingriffselement 5)
- 131: Schrauben
- 132: Kontaktträger
- 133: Kontaktfinger
- 134: Wulst (an Kontaktträger 132)
- 135: Schrauben
- 136: zentrische Ausnehmung (in Adapterplatte 26)
- 137: Gegenkontaktträger
- 138: Buchse
- 139: Buchsenöffnung
- 140: Wulst (an Gegenkontaktträger 137)
- 141: Zentriertrichter
- 142: Leitung
- 143: Schleifkontaktträger
- 144: Stufenbohrung
- 145: Schleifkontakt
- 146: Schleifkontaktfläche
- 147: zylindrischer Ansatz
- 148: Kontaktfederfingerträger
- 149: zentrische Ausnehmung
- 150: Kontaktfederfinger
- 151: hülsenförmiger Ansatz
- 152: Dorn
- 153: Kontaktkappe
- 154: Feder
- 155: Steckeransatz
- 156: Durchgangsbuchse
- 157: erster Wulst (an Kontaktfederfingerträger 148)
- 158: zweiter Wulst (an Schleifkontaktträger 143)

## Patentansprüche

1. Anordnung zur Leistungs- und Signalübertragung bei einer aus wenigstens zwei Einheiten (1, 2, 3) bestehenden Antriebseinrichtung, wobei die wenigstens zwei Einheiten (1, 2, 3) mittels einer aus einer positiven Verschlussteilbaugruppe (4, 4') und einer negativen Verschlussteilbaugruppe (6, 6') bestehenden Verschlussbaugruppe (4, 4', 6, 6') mechanisch durch Ineinanderstecken und Drehen von einer Steckposition um eine Drehachse (100) in eine Verschlussposition nach Art eines Bajonettverschlusses lösbar miteinander verbindbar sind, wobei die positive Verschlussteilbaugruppe (4, 4') wenigstens ein Eingriffselement (5, 5')und die zweite, negative Verschlussteilbaugruppe (6, 6') wenigstens ein das Eingriffselement (5, 5') im gekoppelten Zustand der Verschlussbaugruppe (4, 4', 6, 6') zentrisch aufnehmendes Hinterschnittelement (7, 7') umfasst,
**dadurch gekennzeichnet, dass**
- die Leistungsübertragung über ein aus zwei Leistungsübertragungsbaugruppen (110, 111) bestehendes Leistungsübertragungselement bewerkstelligt wird, wobei die zwei Leistungsübertragungsbaugruppen (110, 111) lösbar miteinander verbindbar sind und die erste Leistungsübertragungsbaugruppe (111) koaxial zur Drehachse (100) an der positiven Verschlussteilbaugruppe (4, 4') und die zweite Leistungsübertragungsbaugruppe (110) koaxial zur Drehachse (100) an der negativen Verschlussteilbaugruppe (6, 6') angeordnet sind, derart dass mit dem Verbinden der positiven und der negativen Verschlussteilbaugruppe (4, 4',6, 6') die zwei Leistungsübertragungsbaugruppen (110, 111) miteinander verbunden werden,
- die Signalübertragung über eine aus zwei Signalübertragungsbaugruppen bestehende Signalübertragungseinheit erfolgt, wobei die zwei Signalübertragungsbaugruppen lösbar miteinander verbindbar sind und die erste Signalübertragungsbaugruppe beabstandet zur Drehachse (100) an der positiven Verschlussteilbaugruppe (4, 4') und die zweite Signalübertragungsbaugruppe beabstandet zur Drehachse (100) an der negativen Verschlussteilbaugruppe (6, 6') angeordnet ist, derart dass mit dem Verbinden der positiven und der negativen Verschlussteilbaugruppe (4, 4',6, 6') die zwei Signalübertragungsbaugruppen zum Signalaustausch miteinander verbunden sind.

2. Anordnung nach Anspruch 1, **dadurch gekennzeichnet, dass** die erste Signalübertragungsbaugruppe aus einer Gruppe von Federkontakten (106, 107, 108, 109) besteht, wobei die Federkontakte (106, 107, 108, 109) jeweils radial zur Drehachse (100) unterschiedlich beabstandet, elektrisch isolierend an der positiven Verschlussteilbaugruppen (4, 4') angeordnet sind und die zweite Signalübertragungsbaugruppe aus zu wenigstens einer Gruppe zusammengefassten Kontaktbereichen (101 bis 104, 101'bis 104', 101" bis 104") besteht, wobei die Kontaktbereiche (101 bis 104, 101'bis 104', 101" bis 104") jeweils radial zur Drehachse (100) unterschiedlich beabstandet, elektrisch isolierend an der negativen Verschlussteilbaugruppen(6, 6') angeordnet sind und dass der Abstand jedes der Federkontakte (106, 107, 108, 109) zur Drehachse mit dem Abstand eines der Kontaktbereiche (101 bis 104, 101' bis 104', 101" bis 104") der wenigstens einen Gruppe von Kontaktbereichen gleich ist, derart dass die Federkontakte (106, 107, 108, 109) und die Kontaktbereiche (101 bis 104, 101'bis 104', 101" bis 104") einer Gruppe in der Verschlussstellung der Verschlussbaugruppe (4, 4', 6, 6') jeweils miteinander korrespondieren und im gekoppelten Zustand der Verschlussbaugruppe (4, 4', 6, 6') jeweils eine elektrisch leitende Verbindung zwischen den Federkontakten (106, 107, 108, 109) und den jeweils zugeordneten Kontaktbereichen (101 bis 104, 101'bis 104', 101" bis 104") bilden.

3. Anordnung nach Anspruch 2, **dadurch gekennzeichnet, dass** die Gruppe von Federkontakten (106, 107, 108, 109) als Federkontaktleiste (105) ausgebildet ist, die aus einem elektrisch nicht leitenden Kontaktträger (110) und den darin jeweils elektrisch isoliert gehaltenen Federkontakten (106, 107, 108, 109) besteht, wobei der Kontaktträger (110) so in einer Aussparung des Eingriffselementes (5, 5') angeordnet ist, dass die Federkontakte (106, 107, 108, 109) über die freie Stirnseite des Eingriffselementes (5, 5') hinaus ragen und der Kontaktträger (110) auf der den Federkontakten (106, 107, 108, 109) gegenüber liegenden Seite als Steckerleiste 122 ausgebildet ist, wobei jeweils ein Federkontakt (106, 107, 108, 109) mit jeweils einem Steckkontakt der Steckerleiste 122 elektrisch leitend verbunden ist.

4. Anordnung nach Anspruch 3, **dadurch gekennzeichnet, dass** die Federkontakte (106, 107, 108, 109) ihrerseits als federnde Stiftelemente ausgebildet sind.

5. Anordnung nach Anspruch 2, **dadurch gekennzeichnet, dass** das Hinterschnittelement (7, 7') auf einem Träger angeordnet ist, der seinerseits stirnseitig an einer von zwei zu koppelnden Einheiten (1, 2, 3) angeordnet ist und dass die zweite Signalübertragungsbaugruppe aus einem Platinenelement (43) besteht, das mittelbar oder unmittelbar zwischen dem Hinterschnittelement (7, 7') und dem Träger angeordnet ist und auf dessen, der zentrischen Einstecköffnung im Hinterschnittelement (7, 7') zugewandten Seite die wenigstens eine Gruppe von Kontaktbereichen (101 bis 104, 101'bis 104', 101" bis 104") angeordnet ist.

6. Anordnung nach Anspruch 5, **dadurch gekennzeichnet, dass** von den Kontaktbereichen (101 bis 104, 101'bis 104', 101" bis 104") der wenigstens einen Gruppe von Kontaktbereichen (101 bis 104, 101'bis 104', 101" bis 104") leitende Verbindungen zu einer Kontaktleiste führen, die auf dem Platinenelement (43) angeordnet ist.

7. Anordnung nach Anspruch 2, **dadurch gekennzeichnet, dass** die positive Verschlussteilbaugruppe (4, 4') und die negative Verschlussteilbaugruppe (6, 6') in unterschiedlichen Drehwinkelpositionen zusammensteckbar und durch Drehen um die Drehachse in unterschiedliche Verschlusspositionen miteinander verbindbar sind und dass für jede dieser möglichen Verschlusspositionen jeweils eine Gruppe von Kontaktbereichen (101, bis 104, 101' bis 101' 110" bis 104") vorgesehen ist, derart, dass nach Verdrehen der Verschlussteilbaugruppen (4, 4',6, 6') in eine der Verschlusspositionen die Kontaktbereiche (101 bis 104, 101'bis 104', 101" bis 104") einer Gruppe mit den Federkontakten (106, 107, 108, 109) korrespondieren und im gekoppelten Zustand der Verschlussbaugruppe (4, 4', 6, 6') mit diesen eine elektrisch leitende Verbindung herstellen.

8. Anordnung nach Anspruch 2, **dadurch gekennzeichnet, dass** die Winkelposition der Kontaktbereiche (101, bis 104, 101' bis 101', 110" bis 104") und ihre Längenerstreckung auf der jeweiligen Kreisbahn so bemessen ist, das der elektrische Kontakt der einzelnen Kontaktbereiche (101, bis 104, 101' bis 101', 110" bis 104") mit dem jeweils zugeordneten Federkontakt (106, 107, 108, 109) bei vorgegebenen Drehwinkelbereichen zwischen der Steckposition und der Verschlussposition herstellt wird.

9. Anordnung nach einem der vorhergehenden Ansprüche, **dadurch gekennzeichnet, dass** das Leistungsübertragungselement zur Übertragung einer elektrischen Leistung vorgesehen ist und die eine erste Einheit (1) einen Elektromotor (39) und die zweite Einheit (2) ein Akkumulatorelement (38) beinhaltet, wobei der erste Anschluss des Elektromotor (39) und der erste Anschluss des Akkumulatorelementes (38) jeweils direkt oder indirekt mit dem Gehäuse (31, 32) der sie aufnehmenden Einheit (1, 2) leitend verbunden sind und die Gehäuse (31,32) ihrerseits im gekoppelten Zustand durch die Verschlussteilbaugrupp (4, 6) elektrisch leitend verbunden sind
- und dass der zweite Anschluss des Elektromotor (39) mit einer ersten Leistungsübertragungsbaugruppe (111) direkt oder indirekt verbunden ist, wobei die erste Leistungsübertragungsbaugruppe (111) aus einem elektrisch nicht leitenden Kontaktträger und einem an diesem angeordneten elektrisch leitenden Kontakt besteht, wobei der Kontaktträger an der positiven Verschlussteilbaugruppe (4, 4') und der Kontakt an dem Kontaktträger so angeordnet sind, dass der Kontakt sich in seiner Längserstreckung koaxial zur Drehachse (100) erstreckt,
- und dass der zweite Anschluss des Akkumulatorelementes (38) mit der zweiten Leistungsübertragungsbaugruppe (110) direkt oder indirekt verbunden ist, wobei die zweite Leistungsübertragungsbaugruppe (110) aus einem elektrisch nicht leitenden Gegenkontaktträger und einem an diesem angeordneten elektrisch leitenden Gegenkontakt besteht, wobei der Gegenkontaktträger an der negativen Verschlussteilbaugruppe 6, 6' und der Gegenkontakt an dem Gegenkontaktträger so angeordnet sind, dass der Gegenkontakt koaxial zur Drehachse (100) angeordnet ist.

10. Anordnung nach Anspruch 9, **dadurch gekennzeichnet, dass** der Kontakt als Kontaktfinger (133) ausgebildet ist und dass der Gegenkontakt als Buchse (138) ausgebildet ist und dass der Kontaktfinger (133) und die Buchse (138) an den Verschlussteilbaugruppen (4, 6) zueinander so angeordnet sind, dass der Kontaktfinger (133) beim Ineinanderstecken der positiven Verschlussteilbaugruppe (4, 4') in die negative Verschlussteilbaugruppe (6, 6') in die Buchse (138) eindringt.

11. Anordnung nach Anspruch 9, **dadurch gekennzeichnet, dass** der Kontakt als Kontaktfederfinger (150) in seiner Längsrichtung federnd ausgebildet ist und der Gegenkontakt als Schleifkontakt (150) ausgebildet ist und dass der Kontaktfederfinger (150) und der Schleifkontakt (145) jeweils an den Verschlussteilbaugruppen zueinander so angeordnet sind, dass der Kontaktfederfinger (150) beim Ineinanderstecken der positiven Verschlussteilbaugruppe (4, 4') in die negative Verschlussteilbaugruppe (6, 6') am Schleifkontakt (145) unter Federspannung anliegt.

12. Anordnung nach Anspruch 9, **dadurch gekennzeichnet, dass** der Kontakt und/ oder der Gegenkontakt von einem ringförmigen Wulst (134, 140, 157, 158) umgeben sind, derart, dass der jeweilige Wulst (134, 140, 157, 158) in Koppelrichtung von Kontakt und Gegenkontakt gesehen zumindest die Höhe des Kontaktes und/ oder der Gegenkontakts aufweist.

13. Anordnung nach Anspruch 12, **dadurch gekennzeichnet, dass** sowohl ein den Kontakt umschließender Wulst (134, 157) als auch ein den Gegenkontakt umschließender Wülste (140, 158) vorhanden ist und dass der den Kontakt umschließende Wulst (134, 157) auch den den Gegenkontakt umschließende Wulst (140, 158) beim Zusammenstecken der ersten Einheit 1 und der zweiten Einheit 2 mit umschließen.

14. Anordnung nach einem der Ansprüche 1 bis 8, **dadurch gekennzeichnet, dass** das Leistungsübertragungselement zur Übertragung einer mechanischen Leistung vorgesehen ist und die eine Einheit (3) ein Getriebeelement (40) und die andere Einheit (1) einen Elektromotor (39) umfasst und dass
- die erste Leistungsübertragungsbaugruppe ein koaxial zur Drehachse (100) auf einer Antriebswelle des Getriebes (40) angeordnete, die positive Verschlussteilbaugruppe (4, 4') koaxial durchragende Motorritzelaufnahme (113) ist
- die zweite Leistungsübertragungsbaugruppe ein koaxial zur Drehachse (100) auf einer Abtriebswelle des Elektromotors (39) angeordnetes, die negative Verschlussteilbaugruppe (6, 6') koaxial durchragendes Motorritzel (112) ist,
- die Motorritzelaufnahme (113) auf der Antriebswelle des Getriebeelementes (40) und das Motorritzel (112) auf der Abtriebswelle des Elektromotors (39) jeweils drehfest so angeordnet sind, dass sie in Verschlussposition der Verschlussbaugruppe (4', 6') drehfest ineinander greifen.
